# EUROPÄISCHE PATENTSCHRIFT

(11) **EP 3 268 408 B1**
(45) Veröffentlichungstag und Bekanntmachung des Hinweises auf die Patenterteilung: **05.12.2018**
(21) Anmeldenummer: 16706888.1
(22) Anmeldetag: 01.03.2016
(51) Int. Cl.: C08G 18/79, C08G 18/42, C08G 18/12, C08G 101/00

(54) **POLYURETHANFORMKÖRPER MIT HERAUSRAGENDER KÄLTEFLEXIBILITÄT**
POLYURETHANE MOLDED BODIES HAVING EXCELLENT FLEXIBILITY AT LOW TEMPERATURE
CORPS MOULÉ EN POLYURÉTHANE AYANT UNE EXCELLENTE FLEXIBILITÉ À FROID

(30) Priorität: 09.03.2015 EP 15158194
(43) Veröffentlichungstag der Anmeldung: 17.01.2018
(73) Patentinhaber: BASF SE, 67056 Ludwigshafen am Rhein (DE)
(72) Erfinder: KARAPETYAN, Gnuni, 49152 Bad Essen (DE); ORTALDA, Marco, 10100 Torino (IT); VALIERI, Marco, Moscow 119311 (RU)
(74) Vertreter: BASF IP Association
(86) Internationale Anmeldenummer: PCT/EP2016/054271
(87) Internationale Veröffentlichungsnummer: WO 2016/142208

(56) Entgegenhaltungen:
- EP-A1- 2 818 489
- DE-A1- 3 042 558

## Beschreibung

Die vorliegende Erfindung betrifft ein Verfahren zur Herstellung von Polyurethanformkörpern bei dem man (a) organische Polyisocyanate mit (b) Verbindungen mit mindestens zwei gegenüber Isocyanat reaktiven Wasserstoffatomen, enthaltend Polyesterpolyol, (c)Treibmittel, (d) Katalysator, (e) Propylencarbonat und mindestens einer Verbindung, ausgewählt aus der Gruppe, bestehend aus Verbindungen der allgemeinen Formel (I) und einer Verbindung der Formel (II), und gegebenenfalls (f) sonstigen Hilfsmittel und/oder Zusatzstoffe zu einer Reaktionsmischung vermischt, in eine Form gibt und zu einem Polyurethanformkörper ausreagieren lässt. Weiter betrifft die vorliegende Erfindung Polyurethanformkörper, erhältlich nach einem solchen Verfahren sowie die Verwendung dieser Formkörper als Lenkrad, Sitz, Armlehne uns insbesondere als Schuhsohle.

Formkörper aus geschäumten Polyurethanen sind bekannt und können für verschiedenste Anwendungen, beispielsweise als Schuhsohlen, eingesetzt werden. In den meisten Anwendungen werden diese auf Basis von Polyethern oder Polyestern als Polyole hergestellt. Dabei weisen aber die Polyesterpolyurethane gegenüber den Polyetherpolyurethanen bessere mechanische Eigenschaften auf. Ferner zeigen die PESOL-Polyurethane (polyesterpolyolbasieren Polyurethane) eine verbesserte Quellungsresistenz gegenüber organischen Stoffen wie z.B. iso-Oktan. Diese Quellungsresistenz ist eine wichtige Forderung für Anwendung als Sicherheitsschuh und kann durch Polyetherpolyurethan nicht erfüllt werden. Bekannte Polyesterpolyurethane zeigen aber eine begrenzte Kälterflexibilität insbesondere bei Temperaturen unter -30 °C.. So zeigen die PESOL-Polyurethane (polyesterpolyolbasieren Polyurethane) bei Raumtemperatur bis hin zu Temperaturen von unter 0 °C elastische Eigenschaften, bei Temperaturen von unter - 30 °C aber sind diese üblicherweise hart und starr. Aus diesem Grund werden in Ländern mit extrem niedrigen Temperaturen im Winter, wie Russland, Skandinavien und Kanada, Schuhsohlen auf Basis von thermoplastischen Gummi eingesetzt. Nachteilig an Gummisolen ist deren hohes spezifisches Gewicht von größer als 1 g/cm³ sowie eine relativ hohe Wärmeleitfähigkeit und damit geringe Isolationswirkung.

Der Einsatz von Weichmachern in Polyurethanen ist bekannt. So beschreibt beispielsweise WO 2009/065826 den Einsatz von Cyclohexandicarbonsäuredialkylestern bei der Herstellung von polyesterbasierten Polyurethanschuhsohlen. Dabei wird Cyclohexandicarbonsäuredialkylester als internes Trennmittel eingesetzt. Kälteflexibilität der Sohle wird in WO 2009/065826 nicht erwähnt.

WO2010125009 beschreibt die Zugabe von tributyl 2-acetoxy-1,2,3-propanetricarboxylate zu thermoplastischem Polyurethan, das auch geschäumt sein kann. Als mögliches Einsatzgebiet ist auch der Einsatz als Schuhsohle genannt. Der Einsatz von Propylencarbonat sowie der Einssatz bei tiefen Temperaturen ist nicht Gegenstand von WO2010125009.
Aufgabe der vorliegenden Erfindung war es, ein polyesterbasierten Polyurethanformkörper mit ausgezeichneten elastischen Eigenschaften und einer hervorragenden Flexibilität bei tiefen Temperaturen, vorzugsweise bei Temperaturen von kleiner als -40, besonders bevorzugt bei Temperaturen von kleiner als -45 °C zu liefern.

Diese Aufgabe wurde gelöst durch einen Polyurethanformkörpern der erhältlich ist durch ein Verfahren, bei dem man (a) organische Polyisocyanate mit (b) Verbindungen mit mindestens zwei gegenüber Isocyanat reaktiven Wasserstoffatomen, enthaltend Polyesterpolyol, (c)Treibmittel, (d) Katalysator, (e) Propylencarbonat und mindestens einer Verbindung, ausgewählt aus der Gruppe, bestehend aus Verbindungen der allgemeinen Formel (I) 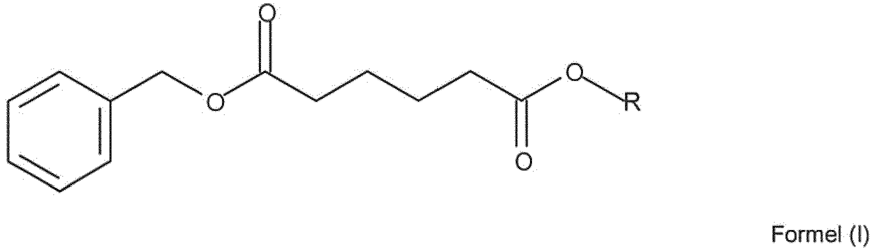 und einer Verbindung der Formel (II), 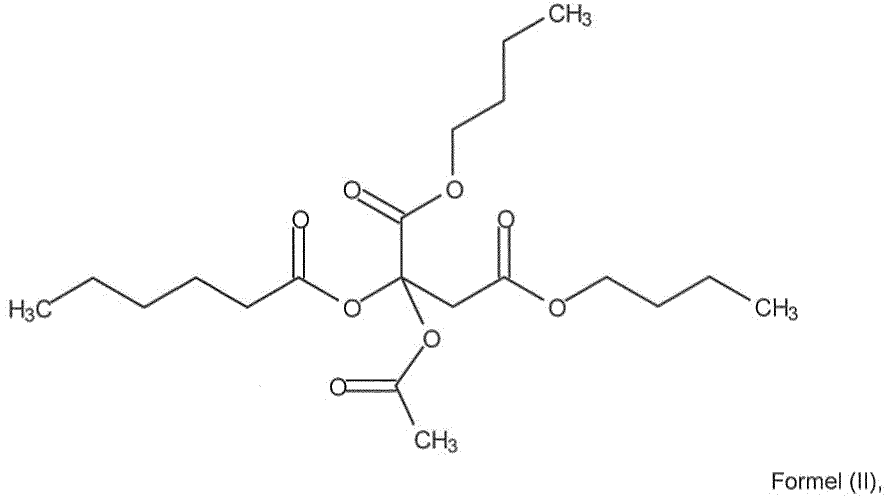 wobei R für einen Kohlenwasserstoffrest mit 3 bis 9 Kohlenstoffatomen steht, der über ein sekundäres oder tertiäres Kohlenstoffatom an den Sauerstoff angebunden ist, und gegebenenfalls (f) sonstigen Hilfsmittel und/oder Zusatzstoffe zu einer Reaktionsmischung vermischt, in eine Form gibt und zu einem Polyurethanformkörper ausreagieren lässt.

Dabei handelt es sich bei den erfindungsgemäßen Polyurethanformkörpern um elastomere Polyurethanschaumstoffe, vorzugsweise Polyurethanintegralschaumstoffe. Unter einen elastomeren Polyurethanschaumstoff sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 5 % ihrer Ausgangsdicke aufweisen. Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei vorzugsweise zwischen 150 g/L und 950 g/L bevorzugt von 180 g/L bis 750 g/L, besonders bevorzugt 300 g/L bis 650 g/L.

Die zur Herstellung der erfindungsgemäßen Polyurethanschaumstoffformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind Methandiphenyldiisocyanat (MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate. MDI umfasst monomeres Metandiphenyldiisocyanat (MMDI), wie 4,4'-Metandiphenyldiisocyanat, 2,4'-Metandiphenyldiisocyanat, und die Mischungen aus monomeren Metandiphenyldiisocyanaten und höherkernigen Homologen des Metandiphenyldiisocyanats (Polymer-MDI).

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat-carbodiimid- oder uretoniminmodifiziertes 4,4' MDI enthalten. Neben 4,4' MDI können auch geringe Mengen 2,4'-MDI und/oder Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Isocyanate a1) können direkt oder in Form ihrer Prepolymere eingesetzt werden. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Verbindungen mit mindestens zwei gegenüber Isocyanat reaktiven Wasserstoffatomen (a-2), zum Prepolymer umgesetzt werden.

Solche Verbindungen mit mindestens zwei gegenüber Isocyanat reaktiven Wasserstoffatomen (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei die unter b) beschriebenen Polyesterpolyole eingesetzt. Vorzugsweise enthält das MDI oder die Prepolymere von MDI, bezogen auf das Gesamtgewicht des MDI einschließlich des zur Herstellung der Prepolymere eingesetzten MDI, mehr als 80 Gew.-%, 4,4'-MDI. Dabei enthält das MDI vorzugsweise 0,5 bis 10 Gew.-% carbodiimidmodifiziertes MDI, insbesondere carbodiimidmodifiziertes 4,4'-MDI.

Die Polyole (b) enthalten Polyesterpolyole (b1). Als Polyesterpolyole werden Polyesterpolyole mit mindestens zwei gegen Isocyanatgruppen reaktiven Wasserstoffatomen eingesetzt. Vorzugsweise weisen Polyesterpolyole ein zahlenmittleres Molekulargewicht von größer 450 g/mol, besonders bevorzugt von größer 500 bis kleiner 8.000 g/mol und insbesondere von 600 bis 3.500 g/mol und eine Funktionalität von 2 bis 4, insbesondere von 2 bis 3, auf.

Polyesterpolyole (b1) können beispielsweise aus organischen Dicarbonsäuren mit 2 bis 12 Kohlenstoffatomen, vorzugsweise aliphatischen Dicarbonsäuren mit 4 bis 10 und insbesondere 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35: 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole (b1) können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 1 80 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 :1,05 bis 1,2 polykondensiert.

Als Polyesterpolyole (b1) eignen sich ferner polymermodifizierte Polyesterpolyole, vorzugsweise Pfropf-Polyesterpolyole. Hierbei handelt es sich um ein sogenanntes Polymerpolyesterpolyol, welches üblicherweise einen Gehalt an, bevorzugt thermoplastischen, Polymeren von 5 bis 60 Gew.-%, bevorzugt 10 bis 55 Gew.-%, besonders bevorzugt 15 bis 50 Gew.-% und insbesondere 20 bis 40 Gew.-%, aufweist. Diese Polymerpolyesterpolyole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterpolyol hergestellt. Das Polymer-Polyesterpolyol enthält neben dem Pfropfcopolymerisaten überwiegend die Homopolymere der Olefine, dispergiert in unverändertem Polyesterpolyol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterpolyol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- und einem Poly-acrylnitril-styrol-Block, welche in der Grenzfläche von kontinuierlicher Phase und dispergierter Phase als Phasenvermittler wirken und das Agglomerieren der Polymerpolyesterpolyolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist Polymerpolyesterpolyol enthalten, liegt dies vorzugsweise zusammen mit weiteren Polyesterpolyolen vor. Besonders bevorzugt ist der Anteil an Polymerpolyol größer als 5 Gew.-%, bezogen auf das Gesamtgewicht der Komponente (b). Die Polymerpolyesterpolyole können beispielsweise, bezogen auf das Gesamtgewicht der Komponente (b), in einer Menge von 7 bis 90 Gew.-%, oder von 11 bis 80 Gew.-% enthalten sein.

Neben Polyesterpolyolen (b1) können auch weitere, in der Polyurethanchemie übliche Polyole mit einem zahlenmittleren Molekulargewicht von größer 500 g/mol, beispielsweise Polyetherole, eingesetzt werden. Dabei beträgt aber der Anteil der weiteren Polyole vorzugsweise weniger als 40 Gew.-%, besonders bevorzugt weniger als 20 Gew.-%, ganz besonders bevorzugt weniger als 10 Gew.-% weiter bevorzugt weniger als 5 Gew.-% und insbesondere 0 Gew.-%, bezogen auf das Gesamtgewicht an Polyesterpolyolen (b) und den weiteren Polyolen.

Weiter können die Verbindungen mit mindestens 2 gegenüber Isocyanat reaktiven Wasserstoffatomen (b) sogenannte Kettenverlängerungsmittel und/oder Vernetzungsmittel enthalten. Als Kettenverlängerungsmittel und/oder Vernetzungsmitte werden Substanzen mit einem Molekulargewicht von vorzugsweise kleiner 450 g/mol, besonders bevorzugt von 60 bis 400 g/mol verstanden, wobei Kettenverlängerer 2 gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohe xan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (f) Monoethylenglycol, 1,4-Butandiol, Diethylengylcol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 40 Gew.-% und insbesondere 2 bis 20 Gew.-%, bezogen auf das Gesamtgewicht der Komponente b), zum Einsatz.

Ferner sind bei der Herstellung von Polyurethanschaumstoffformkörpern Treibmittel c) zugegen. Diese Treibmittel c) können Wasser enthalten, Als Treibmittel c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, , bezogen auf das Gesamtgewicht der Komponenten (a) bis (f).

In einer weiteren bevorzugten Ausführungsform werden der Umsetzung der Komponenten (a) bis (f) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell® der Firma Akzo Nobel erhältlich.

Die Mikrohohlkugeln werden im Allgemeinen in einer Menge von 0,5 bis 5 Gew.-%, bezogen auf das Gesamtgewicht der Komponenten b) und c) zugesetzt.

Als Katalysatoren (d) zur Herstellung der Polyurethanschaumstoffe werden bevorzugt Verbindungen verwendet, welche die Reaktion der Verbindungen mit mindestens zwei gegenüber Isocyanaten reaktiven Wasserstoffatomen (b) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Vorzugsweise werden als Katalysatoren (d) ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponenten (b) und (d).

Als einer Verbindung (e) wird Propylencarbonat und mindestens eine Verbindung, ausgewählt aus der Gruppe, bestehend aus Verbindungen der allgemeinen Formel (I), 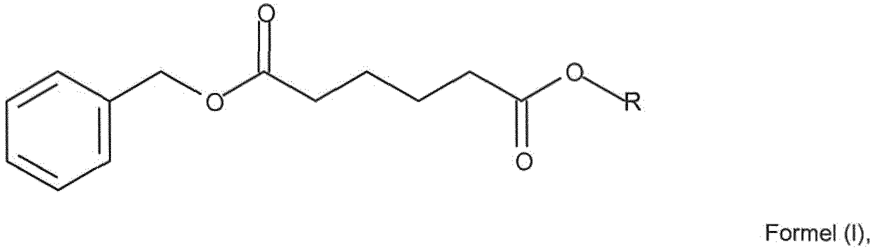 wobei R für einen Kohlenwasserstoffrest mit 3 bis 9 Kohlenstoffatomen steht, der über ein sekundäres oder tertiäres Kohlenstoffatom an den Sauerstoff angebunden ist, vorzugsweise steht R für einen Kohlenwasserstoffrest mit 8 Kohlenstoffatomen und insbesondere steht R für einen linearen Kohlenwasserstoffrest mit 8 Kohlenstoffatomen, der über das C-3-Kohlenstoffatom an den Sauerstoff angebunden ist. angebunden ist, und einer Verbindung der Formel (II) 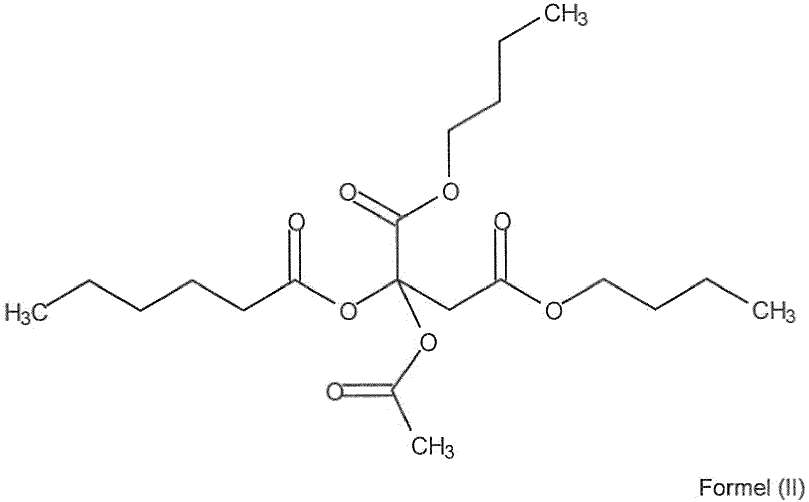 eingesetzt.

Besonders bevorzugt ist die Verbindung nach der allgemeinen Formel (I) Benzyl-isooctyl-adipat :

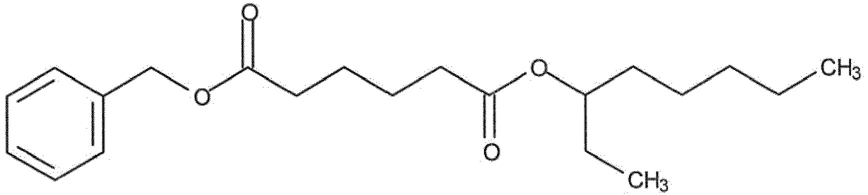

Diese Verbindungen sind kommerziell erhältlich. Propylencarbonat entsteht als Nebenprodukt bei der Polycarbonatsynthese aus Propylenoxid und Kohlendioxid. Es kann auch aus Propylenglycol und Harnstoff mit Zinkeisenmischoxid-Katalysator hergestellt werden. Benzyl-isooctyl-adipat kann beispielsweise unter dem Handelsnamen Adimoll® BO von der Firma Lanxess bezogen werden. Die Verbindung nach Formel (II) wird auch als Acetyl tri-n-butylcitrat bezeichnet und kann beispielsweise unter dem Handelsnamen Citrofol® BII von der Firma Jungbunzlauer bezogen werden.

Vorzugsweise wird die Verbindung (e) in einer Menge von 1 bis 30 Gew.-%, bevorzugt 2 bis 25 Gew.-% und insbesondere 5 bis 20 Gew.-%, jeweils bezogen auf das Gesamtgewicht der Komponenten b) und e), eingesetzt. Dabei wird propylencarbonat vorzugsweise von 0,5 bis 15 Gew.-%, besonders bevorzugt von 2 bis 8 Gew.-%, bezogen auf das Gesamtgewicht der Komponente (b) und (e) eingesetzt. Vorzugsweise wird die mindestens einer Verbindung, ausgewählt aus der Gruppe, bestehend aus einer Verbindung der Formel (I) und einer Verbindung der Formel (II) von 0,5 bis 29 Gew.-%, besonders bevorzugt von 4 bis 25 und insbesondere von 8 bis 20 Gew.-%, bezogen auf das Gesamtgewicht der Komponente (b) und (e) eingesetzt. Dabei wird bevorzugt entweder die Verbindung nach Formel (I) oder die Verbindung nach Formel (II) verwendet. Vorzugsweise beträgt dabei das Gewichtsverhältnis von Propylencarbonat zu dem Gesamtgewicht von der Verbindung nach Formel (I) und der Verbindung nach Formel (II) 1 : 0,5 bis 1 : 5, besonders bevorzugt 1 : 1 bis 1 : 4 und insbesondere 1 : 1,5 bis 1 : 3.

Der Reaktionsmischung zur Herstellung der Polyurethanschäume können gegebenenfalls auch noch Hilfsmittel und/oder Zusatzstoffe (f) zugegeben werden. Genannt seien beispielsweise Trennmittel, Füllstoffe, Farbstoffe, Pigmente, Hydrolyseschutzmittel, antistatische Additive, geruchsabsorbierende Substanzen und fungistatische und/oder bakteriostatisch wirkende Substanzen.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (f), zugegeben.

Die Hydrolysestabilität von Polyesterpolyurethanen kann durch die Zugabe von Additiven, wie Carbodiimiden, deutlich verbessert werden. Solche Materialien sind kommerziell unter Handelsnamen wie z.B. Elastostab™ oder Stabaxol™ erhältlich.

Als antistatische Additive können übliche, für Polyurethane bekannte antistatische Additive eingesetzt werden. Diese umfassen quaternäre Ammoniumsalze und ionische Flüssigkeiten.

In dem erfindungsgemäßen Verfahren werden die Ausgangskomponente (a) bis (f) in solchen Mengen miteinander vermischt, dass das theoretischen Äquivalenzverhältnis von NCO-Gruppen der Polyisocyanate (a) zur Summe der reaktiven Wasserstoffatome der Komponenten (b) bis und (f) 1 : 0,8 bis 1 : 1,25, vorzugsweise 1 : 0,9 bis 1 :1,15 beträgt. Dabei entspricht ein Verhältnis von 1 : 1 einem Isocyanatindex von 100. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden.

Gegenstand der vorliegenden Erfindung ist weiterhin ein Polyurethanformkörper, erhältlich nach dem erfindungsgemäßen Verfahren.

Die erfindungsgemäßen Polyurethanschaumstoffformkörper werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7.

Die Ausgangskomponenten (a) bis (e) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (e) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper, insbesondere Integralschaumstoff eine Dichte von vorzugsweise 150 g/L bis 950 g/L bevorzugt von 180 g/L bis 600 g/L, besonders bevorzugt 300 g/L bis 650 g/L aufweisen. Die Verdichtungsgrade zur Herstellung der erfindungsgemäßen Polyurethanintegralschaumstoffe liegen im Bereich von 1,1 bis 4, vorzugsweise von 1,6 bis 3.

Vorzugsweise wird im zwei-Komponenten-Verfahren gearbeitet. Dazu wird eine Isocyanatkomponente mit einer Polyolkomponente gemischt. Dabei umfasst die Isocyanatkomponente die Isocyanate (a) und die Polyolkomponente die Verbindungen mit mindestens zwei gegenüber Isocyanat reaktiven Wasserstoffatomen (b), und, sofern chemische Treibmittel eingesetzt werden, Treibmittel (c). Vorzugsweise umfasst die Polyolkomponente weiterhin die Katalysatoren (d). Auch die Hilfs und Zusatzstoffe werden vorzugsweise der Polyolkomponente zugegeben. Die Komponente (e) kann sowohl der Isocyanat- als auch der Polyolkomponente zugegeben werden. Vorzugsweise wird Propylencarbonat der Isocyanatkomponente und die Verbindungen der Formel (I) und der Formel (II) der Polyolkomponente zugegeben. Dabei ist die Polyolkomponente lagerstabil und entmischt nicht. Zur Herstellung der erfindungsgemäßen Polyurethanformkörper werden dann die Isocyanatkomponente und die Polyolkomponente gemischt und wie oben beschrieben verarbeitet.

Die erfindungsgemäßen Polyurethanformkörper werden vorzugsweise als Schuhsohle und besonders bevorzugt als (Zwischen-)Sohle, zum Beispiel für Straßenschuhe, Sportschuhe, Sicherheitsschuhe und Stiefel eingesetzt. Insbesondere werden die erfindungsgemäßen Polyurethanintegralschaumstoffe als (Zwischen-)Sohle für Sicherheitsschuhe oder als Sohlenmaterial für Stiefeleingesetzt. Weiter können erfindungsgemäße Polyurethanschaumstoffe im Innenbereich von Verkehrsmitteln beispielsweise in Autos als Lenkräder, Kopfstützen oder Schaltknöpfe oder als Stuhlarmlehnen verwendet. Weitere Verwendungsmöglichkeiten sind als Armlehne für Stühle oder als Motorradsitze. Weitere mögliche Anwendungen sind Anwendungen, Dichtmassen, Dämpfungsmatten, Trittschalldämmung, Skischuhekonstruktionselemente oder in Anwendungen, die in kältere Umgebungen benutzt werden. Erfindungsgemäße Polyurethanformkörper zeigen hervorragende mechanische Eigenschaften, insbesonders eine hervorragende Kälteflexibilität, hervorragende mechanische Eigenschaften nach Feucht-Wärmelagerung und einen nur geringen Abrieb.

Im Folgenden soll die Erfindung anhand von Beispielen verdeutlicht werden.

### Beispiele

Folgende Verbindungen wurden eingesetzt:

| | |
|---|---|
| Iso1: | Isocyanat-Prepolymer mit einem NCO-Gehalt von 16%, herstellbar durch zur Reaktion bringen von 4.4'-MDI und ca. 4 Gew.-%, bezogen auf das Gesamtgewicht der zur Prepolymerherstellung eingesetzten Isocyanate, carbodiimidmodifiziertes MDI und einem Gemisch von Polyesterpolyolen mit einer gemittelten Funktionalität von 2,16 und einer OHZ von 56 mg KOH/g auf Basis von Adipinsäure, Monoethylenglycol, Diethylenglycol, 1,4-Butandiol und Glycerin. |
| Polyol 1: | Polyesterpolyol auf Basis von Adipinsäure, Monoethylenglycol und Diethylenglykol mit einer OH-Zahl von 38 mg KOH/g |
| Polyol 2: | Polyesterpolyol auf Basis von Adipinsäure, 1,4 Butandiol und 1,6 Hexandiol mit einer OH-Zahl von 56 mg KOH/g |
| KV 1: | Monoethylenglycol |
| Kat1: | Triethylendiamin in Monoethylenglykol (33 Gew.-%) |
| Z1: | Polysiloxan |
| Z2: | internes Formtrennmittel |
| W1: | Tris(2-chlorisopropyl)phosphat |
| W2: | Freeflex DPG-A (Dipropylenglycoldibenzoesäureester) |
| W3: | Citroflex® A2 (Acetyltriethylcitrat) |
| W4: | Citroflex® 2 (Triethylcitrat) |
| W5: | Uniplex 83 (Tri-n-butylcitrat) |
| W6: | Hexamoll® Dinch der BASF |
| W7: | Propylencarbonat |
| W8: | Benzyl-isooctyl-adipat |
| W9: | Verbindung der Formel (II) |

93 Gew.-Teile Isocyanat 1 und 6 Gew.-Teile W7 wurden zu einer Isocyanatkomponente B vermischt. Diese B-Komponente weist einen NCO-Gehalt von 16 % auf. Die übrigen Komponenten wurden gemäß Tabelle 1 zu einer Polyolkomponente A vereinigt. Polyol- und Isocyanatkomponente wurden mit Hilfe einer Niederdruck-PU-Castingmaschine vermischt und die resultierende Reaktionsmischung wurde Gemäß Tabelle 1 in eine geschlossene Form mit den Abmessungen 20cm x 20 cm x 1 cm gegeben. Alle Mengenangaben in Tabelle 1 zu den Ausgangssubstanzen sind Gewichtsteile. Der Isocyanatindex ist ebenfalls in Tabelle 1 angegeben. Dabei wurde am optimalen Isocyanat-Index gearbeitet. Dieser wurde mittels Penetrometer bestimmt. Die erhaltenen Prüfplatten wurden 2 Tage bei unter Normklima konditioniert, bevor die mechanische Charakterisierung erfolgte. Dabei wurde die Härte, die Rückprallelastizität nach DIN 53512, die Weiterreißfestigkeit nach DIN ISO 34-1,A, die Zugfestigkeit nach DIN 53504 und die Bruchdehnung nach DIN 53543 bestimmt. Zur Bestimmung der Hydrolyseeigenschaften wurden die Probekörper gemäß DIN 53543bei 70°C und 95% relativer Luftfeuchte gelagert und die Zugfestigkeit bzw. die Bruchdehnung der Probe nach 14 und 21 Tagen Hydrolysealterung. Die Ergebnisse dieser Messungen sind ebenfalls in Tabelle 1 angegeben.

**Tabelle 1**

| | V1 | V2 | V3 | V4 | V5 | V6 | V7 | B2 | B1 |
|---|---|---|---|---|---|---|---|---|---|
| **Polyol 1** | 43,97 | 36,47 | 36,47 | 36,47 | 36,47 | 36,47 | 36,47 | 36,47 | 36,47 |
| **Polyol 2** | 43,97 | 36,47 | 36,47 | 36,47 | 36,47 | 36,47 | 36,47 | 36,47 | 36,47 |
| **KV 1** | 6,83 | 6,83 | 6,83 | 6,83 | 6,83 | 6,83 | 6,83 | 6,83 | 6,83 |
| **Z2** | 2,72 | 2,72 | 2,72 | 2,72 | 2,72 | 2,72 | 2,72 | 2,72 | 2,72 |
| **Wasser** | 0,40 | 0,40 | 0,40 | 0,40 | 0,40 | 0,40 | 0,40 | 0.40 | 0,40 |
| **Z1** | 0,16 | 0,16 | 0,16 | 0,16 | 0,16 | 0,16 | 0,16 | 0,16 | 0,16 |
| **Kat 1** | 1,95 | 1,95 | 1,95, | 1,95 | 1,95 | 1,95 | 1,95 | 1,95 | 1,95 |
| **W1** | | **15,00** | | | | | | | |
| **W2** | | | **15,00** | | | | | | |
| **W3** | | | | **15,00** | | | | | |
| **W4** | | | | | **15,00** | | | | |
| **W5** | | | | | | **15,00** | | | |
| W6 | | | | | | | **15,00** | | |
| **W8** | | | | | | | | **15,00** | |
| **W9** | | | | | | | | | **15,00** |
| Mischungsverhältnis (Optimum) A:B = 100:X | 96,4 | 93,4 | 92,4 | 93,5 | 95,5 | 93,1 | - | 92,1 | 93,5 |
| Isocyanate Index | 95 | 95 | 94 | 95 | 97 | 91 | - | 94 | 95 |
| Steigzeit [sec] | 78 | 80 | 67 | 75 | 74 | 79 | - | 70 | 70 |
| Härte (shore A) | 44 | 41 | 43 | 44 | 41 | 44 | - | 44 | 45 |
| Freischaumdichte | 317 | 314 | 322 | 321 | 295 | 327 | - | 321 | 323 |
| Formteildichte | 511 | 514 | 515 | 515 | 519 | 526 | - | 532 | 522 |
| Zugfestigkeit [N/mm²] | 6,9 | 5,6 | 5,4 | 5,6 | 5,2 | 5,9 | - | 4,3 | 5,9 |
| Bruchdehnung [%] | 457 | 500 | 490 | 465 | 504 | 495 | - | 457 | 466 |
| Weiterreißfestigkeit [N/mm] | 7,5 | 7,3 | 7,8 | 8,7 | 8,0 | 7,9 | - | 7,3 | 8,9 |
| Rückprall [%] | 55 | 55 | 55 | 55 | 54 | 54 | - | 56 | 55 |
| Zugfestigkeit nach Hydrolyse (21 Tage) [N/mm²] | 4,3 | 2,1 | 3,4 | 1,7 | 0,5 | 2,0 | - | 3,2 | 3,6 |
| Bruchdehnung nach Hydrolyse (21 Tage) [%] | 509 | 327 | 475 | 245 | 43 | 329 | - | 452 | 479 |

Bei Einsatz von W6 wurde keine stabile Polyolkomponente erhalten. Somit konnte kein Schaum hergestellt werden.

Zur Bestimmung der Kälteflexibilität wurden in einem analogen Verfahren unter Verwendung der in Tabelle 2 genannten Einsatzstoffe Prüfplattenerhalten. Dabei wurde bei einem Isocyanatindex gearbeitet, der 1,5 Punkte unter dem Optimum lag.

**Tabelle 2**

| | **B3** | **B4** | **V8** | **V9** | **B5** | **B6** |
|---|---|---|---|---|---|---|
| **Polyol 1** | **37,17** | **37,17** | **37,17** | **37,17** | **37,17** | **37,17** |
| **Polyol 2** | **37,17** | **37,17** | **37,17** | **37,17** | **37,17** | **37,17** |
| **KV 1** | 6,83 | 6,83 | 6,83 | 6,83 | 6,83 | 6,83 |
| **Z2** | 2,72 | 2,72 | 2,72 | 2,72 | 2,72 | 2,72 |
| **Wasser** | 0,4 | 0,4 | 0,4 | 0,4 | 0,4 | 0,4 |
| **Z1** | 0,16 | 0,16 | 0,16 | 0,16 | 0,16 | 0,16 |
| **Kat 1** | 1,95 | 1,95 | 1,95 | 1,95 | 1,95 | 1,95 |
| **W1** | **3,63** | - | **3,63** | - | **3,63** | - |
| **W2** | - | - | **9,97** | **13,6** | - | - |
| **W8** | - | - | - | - | **9,97** | **13,6** |
| **W9** | **9,97** | **13,6** | - | - | - | - |
| | | | | | | |
| Mischungsverhältnis) A:B = 100:X | 93 | 94 | 94 | 94 | 94 | 94 |
| optimales Mischungsverhältnis A:B=100:X | 96 | 97 | 97 | 97 | 97 | 96 |
| Freischaumdichte [g/l] | 271 | 269 | 265 | 266 | 267 | 269 |
| Formteildichte [g/l] | 500 | 500 | 500 | 500 | 500 | 500 |
| Entformzeit [min:sec] | 04:00 | 04:00 | 04:00 | 04:00 | 04:00 | 04:00 |
| Härte [Shore A] | 39 | 40 | 40 | 39 | 40 | 39 |
| Abrieb (mg) | 202 | 139 | 234 | 265 | 73 | 49 |
| Zugfestigkeit [N/mm²] | 5,8 | 6,0 | 5,8 | 5,6 | 5,5 | 5,5 |
| Bruchdehnung [%] | 551 | 532 | 540 | 538 | 541 | 552 |
| Weiterreißfestigkeit [N/mm] | 6,3 | 6,4 | 6,3 | 6,6 | 6,8 | 6,4 |
| Zugfestigkeit nach Hydrolyse (14 Tage) [N/mm²] | 3,3 | 5,1 | 4,1 | 4,5 | 3,9 | 3,4 |
| Bruchdehnung nach Hydrolyse (14 Tage) [%] | 509 | 565 | 542 | 551 | 526 | 496 |
| Kälteflexibilität nach GOST 27420-87, 8.000 Cyklen bei - 45 °C | Bestanden | Bestanden | Nicht bestanden | Nicht bestanden | Bestanden | Bestanden |

Diese Versuche zeigen, dass nur unter Einsatz der erfindungsgemäßen Verbindungen der GOST-Test bei -45 °C bestanden werden kann. Weiterhin zeigen die Benzyl-isooctyl-adipat haltigen Proben überraschenderweise hervorragende Abriebeigenschaften. Dabei wurde der Abrieb nach DIN 53516 mit einem Anpressdruck von 10 N bestimmt.

## Patentansprüche

1. Verfahren zur Herstellung von Polyurethanformkörpern bei dem man
a) organische Polyisocyanate mit
b) Verbindungen mit mindestens zwei gegenüber Isocyanat reaktiven Wasserstoffatomen, enthaltend Polyesterpolyol
c) Treibmittel,
d) Katalysator,
e) Propylencarbonat und mindestens einer Verbindung, ausgewählt aus der Gruppe, bestehend aus Verbindungen der allgemeinen Formel (I), 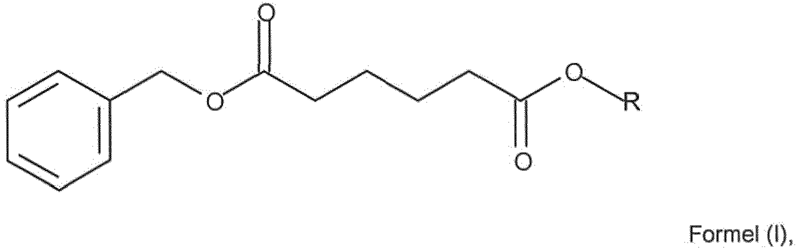 wobei R für einen Kohlenwasserstoffrest mit 3 bis 9 Kohlenstoffatomen steht, der über ein sekundäres oder tertiäres Kohlenstoffatom an den Sauerstoff angebunden ist,
und einer Verbindung der Formel (II), 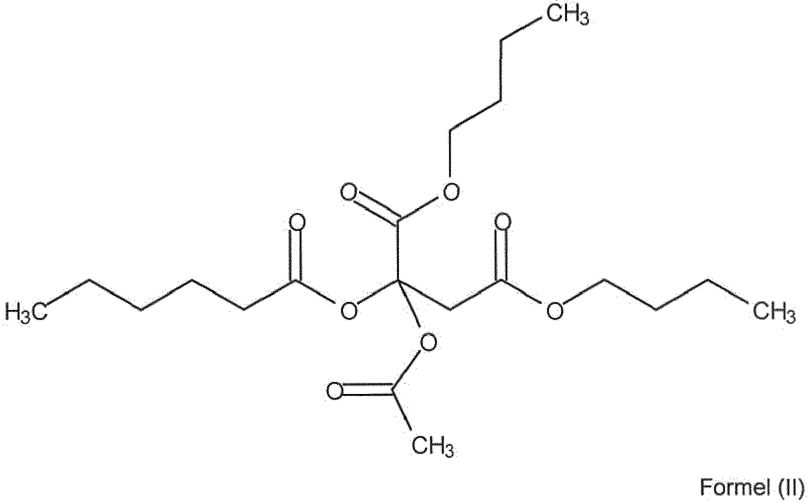 und
f) gegebenenfalls sonstigen Hilfsmittel und/oder Zusatzstoffe zu einer Reaktionsmischung vermischt, in eine Form gibt und zu einem Polyurethanformkörper ausreagieren lässt.

2. Verfahren nach Anspruch 1, **dadurch gekennzeichnet, dass** R für einen linearen Kohlenwasserstoffrest mit 8 Kohlenstoffatomen, der über das C-3-Kohlenstoffatom an den Sauerstoff angebunden ist, steht.

3. Verfahren nach Anspruch 1 oder 2, **dadurch gekennzeichnet, dass** die Verbindung e) in einer Menge von 1 bis 30 Gew.-%, bezogen auf das Gesamtgewicht der Komponenten b) und e), eingesetzt wird.

4. Verfahren nach einem der Ansprüche 1 bis 3, **dadurch gekennzeichnet, dass** das Gewichtsverhältnis von Propylencarbonat zu dem Gesamtgewicht von der Verbindung nach Formel (I) und der Verbindung nach Formel (II) 1 : 0,5 bis 1 : 5 beträgt.

5. Verfahren nach einem der Ansprüche 1 bis 4, **dadurch gekennzeichnet, dass** als Isocyanat a) MDI oder Prepolymere von MDI eingesetzt wird.

6. Verfahren nach Anspruch 5, **dadurch gekennzeichnet, dass** das MDI oder die Prepolymere von MDI, bezogen auf das Gesamtgewicht des MDI einschließlich des zur Herstellung der Prepolymere eingesetzten MDI, mehr als 80 Gew.-%, 4,4'-MDI enthält.

7. Verfahren nach einem der Ansprüche 1 bis 6, **dadurch gekennzeichnet dass** das MDI oder die Prepolymere von MDI, bezogen auf das Gesamtgewicht des MDI einschließlich des zur Herstellung der Prepolymere eingesetzten MDI, 0,5 bis 10 Gew.-% carbodiimidmodifiziertes MDI enthält.

8. Verfahren nach einem der Ansprüche 5 bis 7, **dadurch gekennzeichnet, dass** das Prepolymere von MDI erhältlich ist durch Reaktion von MDI mit Polyesterpolyol.

9. Verfahren nach einem der Ansprüche 1 bis 8, **dadurch gekennzeichnet, dass** Polyesterpolyol ein Polyesterpolyol (b1) enthält, das durch Kondensation von Dicarbonsäuren mit 4 bis 10 C-Atomen mit einem difunktionellen und/oder trifunktionellen, aliphatischen Alkohol erhältlich ist.

10. Verfahren nach Anspruch 9, **dadurch gekennzeichnet, dass** die Komponente (b) neben den Komponenten (b1) weniger als 10 Gew.-% weitere Polyole enthält.

11. Polyurethanformkörper, erhältlich nach einem Verfahren gemäß einem der Ansprüche 1 bis 10.

12. Polyurethanformkörper nach Anspruch 11, **dadurch gekennzeichnet, dass** der Polyurethanformkörper ein Polyurethanintegralschaumstoff mit einer Dichte von 150 bis 950 g/L ist.

13. Polyurethanformkörper nach Anspruch 11, **dadurch gekennzeichnet, dass** der Polyurethanformkörper eine Schuhsohle ist.

14. Verwendung eines Polyurethanformkörpers gemäß Anspruch 11 als Schuhsohle.

## Claims

1. A process for producing polyurethane moldings, wherein
a) organic polyisocyanates are mixed with
b) compounds having at least two hydrogen atoms which are reactive toward isocyanate, comprising polyester polyol,
c) blowing agent,
d) catalyst,
e) propylene carbonate and at least one compound selected from the group consisting of compounds of the general formula (I), 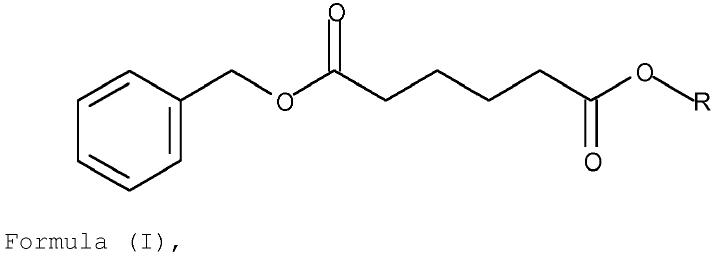 where R is a hydrocarbon radical which has from 3 to 9 carbon atoms and is bound to the oxygen via a secondary or tertiary carbon atom,
and a compound of the formula (II), 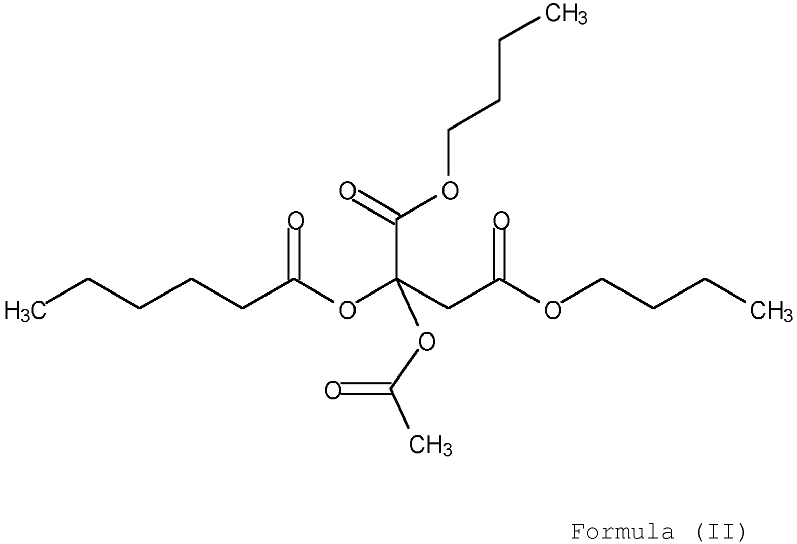 and
f) optionally other auxiliaries and/or additives to give a reaction mixture, introduced into a mold and allowed to react to give a polyurethane molding.

2. The process according to claim 1, wherein R is a linear hydrocarbon radical which has 8 carbon atoms and is bound to the oxygen via the C-3 carbon atom.

3. The process according to claim 1 or 2, wherein the compound e) is used in an amount of from 1 to 30% by weight, based on the total weight of the components b) and e).

4. The process according to any of claims 1 to 3, wherein the weight ratio of propylene carbonate to the total weight of the compound of the formula (I) and the compound of the formula (II) is from 1 : 0.5 to 1 : 5.

5. The process according to any of claims 1 to 4, wherein MDI or prepolymers of MDI is/are used as isocyanate a).

6. The process according to claim 5, wherein the MDI or the prepolymers of MDI comprise(s), based on the total weight of the MDI including the MDI used for preparing the prepolymers, more than 80% by weight of 4,4'-MDI.

7. The process according to any of claims 1 to 6, wherein the MDI or the prepolymers of MDI comprise(s), based on the total weight of the MDI including the MDI used for preparing the prepolymers, from 0.5 to 10% by weight of carbodiimide-modified MDI.

8. The process according to any of claims 5 to 7, wherein the prepolymer of MDI is obtainable by reaction of MDI with polyester polyol.

9. The process according to any of claims 1 to 8, wherein the polyester polyol comprises a polyester polyol (b1) which is obtainable by condensation of dicarboxylic acids having from 4 to 10 carbon atoms with a bifunctional and/or trifunctional, aliphatic alcohol.

10. The process according to claim 9, wherein the component (b) comprises less than 10% by weight of further polyols in addition to the components (b1).

11. A polyurethane molding obtainable by a process according to any of claims 1 to 10.

12. The polyurethane molding according to claim 11, wherein the polyurethane molding is a polyurethane integral foam having a density of from 150 to 950 g/l.

13. The polyurethane molding according to claim 11, wherein the polyurethane molding is a shoe sole.

14. The use of a polyurethane molding according to claim 11 as shoe sole.

## Revendications

1. Procédé de fabrication de corps moulés de polyuréthane, selon lequel
a) des polyisocyanates organiques sont mélangés avec
b) des composés contenant au moins deux atomes d'hydrogène réactifs avec les isocyanates, contenant un polyester-polyol,
c) un agent gonflant,
d) un catalyseur,
e) du carbonate de propylène et au moins un composé choisi dans le groupe constitué par les composés de formule générale (I) 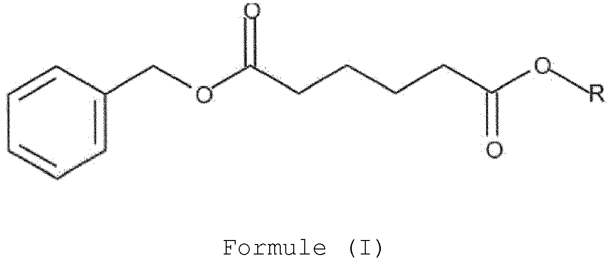 dans laquelle R représente un radical hydrocarboné de 3 à 9 atomes de carbone, qui est relié à l'oxygène par un atome de carbone secondaire ou tertiaire,
et un composé de formule (II) 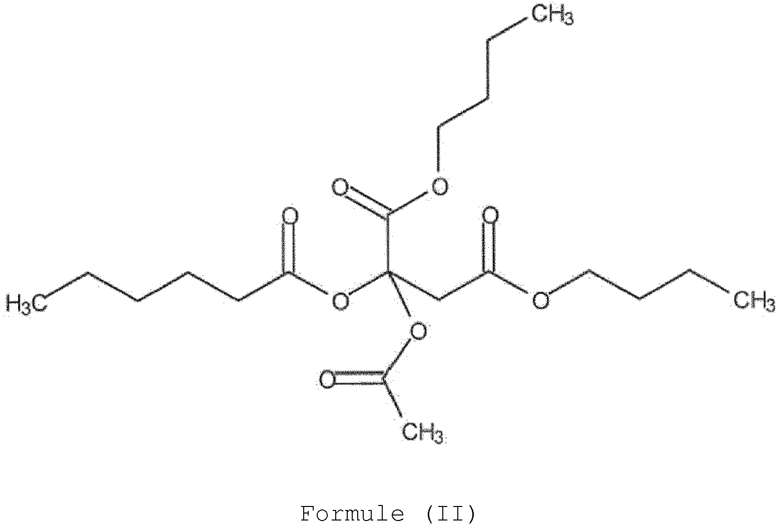 et
f) éventuellement d'autres adjuvants et/ou additifs, pour former un mélange réactionnel, qui est disposé dans un moule et laissé réagir pour former un corps moulé de polyuréthane.

2. Procédé selon la revendication 1, **caractérisé en ce que** R représente un radical hydrocarboné linéaire contenant 8 atomes de carbone, qui est relié à l'oxygène par l'atome de carbone C-3.

3. Procédé selon la revendication 1 ou 2, **caractérisé en ce que** le composé e) est utilisé en une quantité de 1 à 30 % en poids, par rapport au poids total des composants b) et e).

4. Procédé selon l'une quelconque des revendications 1 à 3, **caractérisé en ce que** le rapport en poids entre le carbonate de propylène et le poids total du composé de formule (I) et du composé de formule (II) est de 1:0,5 à 1:5.

5. Procédé selon l'une quelconque des revendications 1 à 4, **caractérisé en ce que** du MDI ou un prépolymère de MDI est utilisé en tant qu'isocyanate a).

6. Procédé selon la revendication 5, **caractérisé en ce que** le MDI ou le prépolymère de MDI contient, par rapport au poids total du MDI, y compris le MDI utilisé pour la fabrication du prépolymère, plus de 80 % en poids de 4,4'-MDI.

7. Procédé selon l'une quelconque des revendications 1 à 6, **caractérisé en ce que** le MDI ou le prépolymère de MDI contient, par rapport au poids total du MDI, y compris le MDI utilisé pour la fabrication du prépolymère, 0,5 à 10 % en poids de MDI modifié par un carbodiimide.

8. Procédé selon l'une quelconque des revendications 5 à 7, **caractérisé en ce que** le prépolymère de MDI peut être obtenu par réaction de MDI avec un polyester-polyol.

9. Procédé selon l'une quelconque des revendications 1 à 8, **caractérisé en ce que** le polyester-polyol contient un polyester-polyol (b1) qui peut être obtenu par condensation d'acides dicarboxyliques de 4 à 10 atomes C avec un alcool aliphatique bifonctionnel et/ou trifonctionnel.

10. Procédé selon la revendication 9, **caractérisé en ce que** le composant (b) contient moins de 10 % en poids d'autres polyols en plus du composant (b1).

11. Corps moulé de polyuréthane, pouvant être obtenu par un procédé selon l'une quelconque des revendications 1 à 10.

12. Corps moulé de polyuréthane selon la revendication 11, **caractérisé en ce que** le corps moulé de polyuréthane est une mousse intégrale de polyuréthane ayant une densité de 150 à 950 g/l.

13. Corps moulé de polyuréthane selon la revendication 11, **caractérisé en ce que** le corps moulé de polyuréthane est une semelle de chaussure.

14. Utilisation d'un corps moulé de polyuréthane selon la revendication 11 en tant que semelle de chaussure.
